# EUROPEAN PATENT APPLICATION

(11) **EP 4 099 254 A1**
(43) Date of publication of application: **07.12.2022**
(21) Application number: 21747849.4
(22) Date of filing: 01.02.2021
(51) Int. Cl.: G06Q 30/06, G06Q 10/00

(54) **ESTIMATION DEVICE, ESTIMATION SYSTEM, ESTIMATION METHOD, AND PROGRAM**

(30) Priority: 31.01.2020 JP 2020015476
(71) Applicant: Cognivision Inc., Tokyo, 163-6024 (JP)
(72) Inventor: YOSHIMI, Yukio, Tokyo 163-6024 (JP); MINAMIDE, Akihiko, Tokyo 163-6024 (JP); SAKURABASHI, Makoto, Tokyo 163-6024 (JP); HOSONO, Kazumasa, Tokyo 163-6024 (JP); OGIWARA, Yoshikage, Tokyo 163-6024 (JP); TAKEUCHI, Norimasa, Tokyo 163-6024 (JP); TOI, Katsuhiro, Tokyo 163-6024 (JP); FURUKAWA, Naohiro, Tokyo 163-6024 (JP)
(74) Representative: J A Kemp LLP
(86) International application number: PCT/JP2021/003453
(87) International publication number: WO 2021/153796

(57) **Abstract**

There is provided an estimation apparatus that is easily operable by a user. The present invention is an estimation apparatus for calculating an estimated amount of money necessary to repair a vehicle, the estimation apparatus including a vehicle type information storage unit for storing, in association with each other, vehicle type identification information for identifying a vehicle type and pieces of component region information each indicating a region of a vehicle component, where a position of the region indicated by the component region information corresponds to a position in a vehicle sample image showing a vehicle corresponding to the vehicle type, the estimation apparatus being configured to: identify the vehicle type based on input about an estimation target vehicle, acquire the component region information corresponding to the vehicle type that is identified, from the vehicle type information storage unit, receive input about a region corresponding to a position in the vehicle sample image as input of a damaged range, determine whether the region indicated by the component region information that is acquired and the damaged range that is input overlap each other, determine a vehicle component and repair details based on the region that is determined to be overlapped, and calculate the estimated amount of money based on the vehicle component and the repair details for the vehicle component that are determined.

## Description

### Technical Field

The present invention relates to an estimation apparatus, an estimation system, an estimation method, and a program, and more particularly, to an estimation apparatus, an estimation system, an estimation method, and a program for calculating an estimated amount of money necessary to repair a vehicle.

### Background Art

At the time of making an estimate of a cost necessary to repair a damaged vehicle, a component that is to be repaired has to be appropriately selected, and work related to repair of the component has to be determined. For example, Patent Literatures 1 and 2 disclose systems that enable estimation of a cost necessary to repair a vehicle.

### Citation List

### Patent Literature

[Patent Literature 1]
   Japanese Patent Laid-Open No. 2016-151890
[Patent Literature 2]
   Japanese Patent Laid-Open No. 2008-310535

### Summary of Invention

### Technical Problem

However, the systems disclosed in Patent Literatures 1 and 2 are systems for users who are relatively familiar with estimation of a repair cost for a vehicle, and request selection of broken components, for example. In this regard, there is a demand for an estimation apparatus that is more easily operable by a user who is not familiar with estimation of the repair cost for a vehicle.

The present invention has been made to solve such a problem, and a main object thereof is to provide an estimation apparatus that is more easily operable by users, and the like.

### Solution to Problem

To achieve the object described above, an estimation apparatus according to a mode of the present invention is
an estimation apparatus for calculating an estimated amount of money necessary to repair a vehicle, the estimation apparatus including a vehicle type information storage unit for storing, in association with each other, vehicle type identification information for identifying a vehicle type and pieces of component region information each indicating a region of a vehicle component, where a position of the region indicated by the component region information corresponds to a position in a vehicle sample image showing a vehicle corresponding to the vehicle type,
the estimation apparatus being configured to:
   identify the vehicle type based on input about an estimation target vehicle that is a target for which an estimate for repair is to be made,
   acquire the component region information corresponding to the vehicle type that is identified, from the vehicle type information storage unit,
   receive input about a region corresponding to a position in the vehicle sample image as input of a damaged range,
   determine whether the region indicated by the component region information that is acquired and the damaged range that is input overlap each other,
   determine a vehicle component and repair details for the vehicle component based on the region that is determined to be overlapped, and
   calculate the estimated amount of money based on the vehicle component and the repair details for the vehicle component that are determined.

Furthermore, in the present invention, preferably,
to determine, by the estimation apparatus, whether the region indicated by the component region information that is acquired and the damaged range that is input overlap each other or not is to determine at least one of whether the region indicated by the component region information that is acquired is at least partially included in the damaged range that is input, and whether the damaged range that is input is at least partially included in the region indicated by the component region information that is acquired.

Furthermore, in the present invention, preferably,
the estimation apparatus further includes a repair information storage unit for storing, in association with one another, the vehicle type identification information, pieces of region identification information for identifying respective pieces of component region information, the vehicle component and the repair details for the vehicle component, where
to determine the vehicle component and the repair details for the vehicle component is to determine the vehicle component and the repair details for the vehicle component based on vehicle identification information corresponding to the vehicle type that is identified and the region identification information corresponding to the component region information indicating the region that is determined to be overlapped that are associated with each other in the repair information storage unit.

Furthermore, in the present invention, preferably,
the repair information storage unit further stores, in association, a concomitant vehicle component and repair details for the concomitant vehicle component, repair of the concomitant vehicle component being necessary concomitantly with the vehicle component and the repair details for the vehicle component that are determined, and
the estimation apparatus
   determines, based on the vehicle component and the repair details for the vehicle component that are determined, the concomitant vehicle component and the repair details for the concomitant vehicle component that are associated in the repair information storage unit, and
   calculates the estimated amount of money based further on the concomitant vehicle component and the repair details for the concomitant vehicle component that are determined.

Furthermore, in the present invention, preferably,
the repair information storage unit further stores, in association, a damage level indicating a degree of damage,
the estimation apparatus receives input of the damage level corresponding to input of the damaged range, and
to determine, by the estimation apparatus, the vehicle component and the repair details for the vehicle component is to determine the vehicle component and the repair details for the vehicle component based on the vehicle identification information corresponding to the vehicle type that is identified, the region identification information corresponding to the component region information that is determined to be overlapped, and the damage level that is input that are associated with one another in the repair information storage unit.

Furthermore, in the present invention, preferably,
the vehicle type information storage unit stores a damage level reference image corresponding to one vehicle type, in association with the vehicle type identification information, the damage level reference image being an image, according to the damage level, showing a damaged part of the vehicle, and
the estimation apparatus
   acquires the damage level reference image corresponding to the vehicle type that is identified, from the vehicle type information storage unit, and
   displays a plurality of damage level reference images corresponding to the vehicle type that is identified, on a display device of the estimation apparatus to receive input of the damage level.

Furthermore, in the present invention, preferably, the estimation apparatus
receives, at a time of receiving input about the vehicle type of the estimation target vehicle, input of a plurality of captured images capturing the estimation target vehicle,
determines likelihood of the damage level in the captured image that is input, using a learning model obtained by learning images that are categorized based on the damage level, and
displays, as suggestion information, the likelihood of the damage level that is determined, on a display device of the estimation apparatus to receive input of the damage level.

Furthermore, in the present invention, preferably,
the vehicle type information storage unit further stores, in association, the vehicle sample image corresponding to the vehicle type, and
the estimation apparatus
   acquires the vehicle sample image corresponding to the vehicle type that is identified, from the vehicle type information storage unit, and
   displays the vehicle sample image that is acquired on a display device of the estimation apparatus to receive input of the damaged range, and receives input of the damaged range.

Furthermore, in the present invention, preferably,
the vehicle type information storage unit further stores, in association, a plurality of vehicle sample images corresponding to one vehicle type, the plurality of vehicle sample images including one reference image and a selected image showing a vehicle seen from a different angle from the reference image, and the position of the region indicated by the component region information corresponds to a position in at least one of the reference image and the selected image,
the estimation apparatus acquires the reference image and the selected image corresponding to the vehicle type that is identified, from the vehicle type information storage unit, and
to receive, by the estimation apparatus, input of the damaged range is to display, on a display device of the estimation apparatus, the reference image or the selected image that is acquired and to receive input about a region corresponding to a position in the reference image or the selected image.

Furthermore, in the present invention, preferably,
to receive input of the damaged range is
to display the reference image that is acquired on the display device of the estimation apparatus and receive input of the damaged range, and to display, on the display device, a display encouraging switching to the selected image, in a case where the damaged range that is input is within a predetermined range, and
to display the selected image on the display device according to input from a user, and to receive input of the damaged range.

Furthermore, in the present invention, preferably,
the predetermined range includes at least one of regions on a front part and a rear part of the vehicle in the vehicle sample image.

Furthermore, in the present invention, preferably,
to calculate the estimated amount of money is to determine a component price and an index indicating a repair work time based on the vehicle component and the repair details for the vehicle component that are determined, and to calculate the estimated amount of money based on the component price and the index that are determined.

Furthermore, to achieve the object described above, an estimation system according to a mode of the present invention is
an estimation system, including a server and a client terminal, for calculating an estimated amount of money necessary to repair a vehicle where
the server includes a vehicle type information storage unit for storing, in association with each other, vehicle type identification information for identifying a vehicle type and pieces of component region information each indicating a region of a vehicle component, where a position of the region indicated by the component region information corresponds to a position in a vehicle sample image showing a vehicle corresponding to the vehicle type, and
the estimation system is configured to:
   identify the vehicle type based on input about an estimation target vehicle that is a target for which an estimate for repair is to be made,
   acquire the component region information corresponding to the vehicle type that is identified, from the vehicle type information storage unit,
   receive input about a region corresponding to a position in the vehicle sample image as input of a damaged range,
   determine whether the region indicated by the component region information that is acquired and the damaged range that is input overlap each other,
   determine a vehicle component and repair details for the vehicle component based on the region that is determined to be overlapped, and
   calculate the estimated amount of money based on the vehicle component and the repair details for the vehicle component that are determined.

To achieve the object described above, an estimation method according to a mode of the present invention is
an estimation method, performed by a computer, of calculating an estimated amount of money necessary to repair a vehicle, the method including the steps of:
identifying a vehicle type based on input about an estimation target vehicle that is a target for which an estimate for repair is to be made;
acquiring component region information corresponding to the vehicle type that is identified, from a vehicle type information database storing, in association with each other, vehicle type identification information for identifying the vehicle type and pieces of component region information each indicating a region of a vehicle component, where a position of the region indicated by the component region information corresponds to a position in a vehicle sample image showing a vehicle corresponding to the vehicle type;
receiving input about a region corresponding to a position in the vehicle sample image as input of a damaged range;
determining whether the region indicated by the component region information that is acquired and the damaged range that is input overlap each other;
determining a vehicle component and repair details for the vehicle component based on the region that is determined to be overlapped; and
calculating the estimated amount of money based on the vehicle component and the repair details for the vehicle component that are determined.

To achieve the object described above, a program according to a mode of the present invention is a program for causing a computer to perform the steps of the method described above.

### Advantageous Effect of Invention

According to the present invention, a user may more easily perform operation.

### Brief Description of Drawings

[Figure 1] Figure 1 is a block diagram showing a hardware configuration of an estimation apparatus of an embodiment of the present invention.
[Figure 2] Figure 2 is an example of a functional block diagram of the estimation apparatus of the embodiment of the present invention.
[Figure 3] Figure 3 is a diagram showing an example of a vehicle type information table.
[Figure 4] Figure 4 is a diagram showing an example of a vehicle sample image.
[Figure 5] Figure 5 is a diagram showing an example of a component region information.
[Figure 6] Figure 6 is a diagram showing an example of the component region information.
[Figure 7] Figure 7 is a diagram showing an example of a damage level reference image.
[Figure 8] Figure 8 is a diagram showing an example of a repair information table.
[Figure 9] Figure 9 is an example of a region that is indicated by the component region information corresponding to a region code.
[Figure 10] Figure 10 is an example of a region that is indicated by the component region information corresponding to a region code.
[Figure 11] Figure 11 is an example of a screen for inputting a vehicle type, displayed on a display device by a control unit.
[Figure 12] Figure 12 is an example of a screen where a user is to input a damage level, the screen being displayed on the display device by the control unit.
[Figure 13] Figure 13 is an example of a screen where a user is to input a damaged range, the screen being displayed on the display device by the control unit.
[Figure 14] Figure 14 is a diagram for describing determination of overlap between the damaged range and a region indicated by each piece of component region information.
[Figure 15] Figure 15 is a flowchart describing information processing that is performed by the estimation apparatus of the embodiment of the present invention.
[Figure 16] Figure 16 is a diagram showing an example of the vehicle sample image according to a modification of the present invention.
[Figure 17] Figure 17 is a diagram showing an example of the component region information according to the modification of the present invention.
[Figure 18] Figure 18 is a diagram showing an example of the component region information according to the modification of the present invention.
[Figure 19] Figure 19 is an example of a screen according to the modification of the present invention, where a user is to input the damaged range, the screen being displayed on the display device by the control unit, the screen including a display encouraging switching to a selected image.
[Figure 20] Figure 20 is an example of a screen according to a modification of the present invention, where a user is to input the damage level, the screen being displayed on the display device by the control unit.
[Figure 21] Figure 21 is an example of a screen according to a modification of the present invention, where a user is to input the damaged range, the screen being displayed on the display device by the control unit.
[Figure 22] Figure 22 is a diagram showing an example of an overall configuration of an estimation system of a modification of the present invention.

### Description of Embodiments

Hereinafter, embodiments of the present invention will be described with reference to the drawings. Same reference signs in the drawings indicate same or corresponding parts unless stated otherwise, and unnecessarily detailed description may be omitted.

With an estimation apparatus 1 of an embodiment of the present invention, an application for estimation for calculating an estimated amount of money necessary to repair a vehicle, such as a car, that is damaged is installed. When the application for estimation is executed, the estimation apparatus 1 encourages a user to perform a required input operation and receives input necessary for calculation of the estimated amount of money, and thereby calculates the estimated amount of money necessary to repair the vehicle.

To calculate the estimated amount of money necessary to repair a damaged vehicle, the estimation apparatus 1 determines a vehicle component that is a repair target and repair details for the vehicle component. The vehicle component includes a bodywork target part, and repair details include replacement, attachment/detachment, repair, and bodywork, for example. The estimation apparatus 1 calculates the estimated amount of money necessary for entire repair by calculating the price of a component determined to be a replacement target and a labor charge, and by also calculating a labor charge for a component determined to be a bodywork target, for example. Additionally, generally, a labor charge for car repair is calculated as the product of an index and a labor rate. The index is an indication that indicates a standard repair work time and that is created by setting certain requirements in advance to enable logical calculation of the labor charge for damaged car repair, and is created by the Jiken Center Co., Ltd., for example.

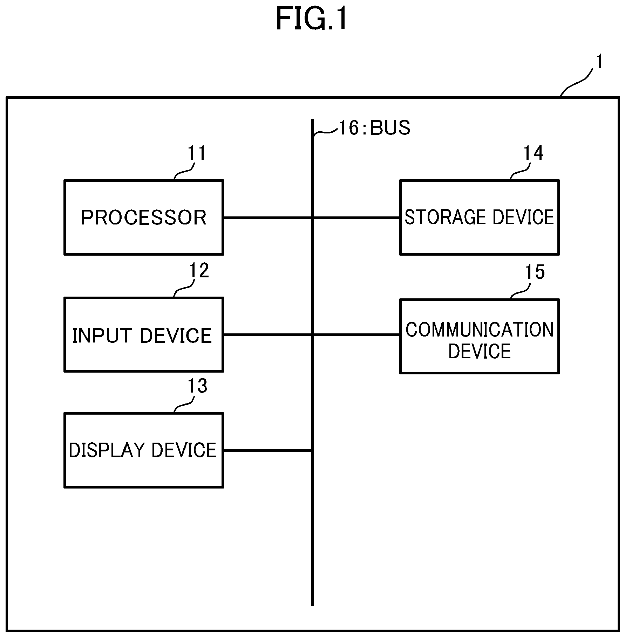

Figure 1 is a block diagram showing a hardware configuration of the estimation apparatus 1 according to an embodiment of the present invention. The estimation apparatus 1 of the present embodiment has a configuration that is the same as a general computer. The estimation apparatus 1 includes a processor 11, an input device 12, a display device 13, a storage device 14, and a communication device 15. These structural devices are connected by a bus 16. Additionally, an interface is provided between the bus 16 and each structural device as necessary. Additionally, the estimation apparatus 1 may include a plurality of computers.

The processor 11 controls operation of the entire estimation apparatus 1, and is a CPU, for example. Additionally, an electronic circuit such as an MPU may also be used as the processor 11. The processor 11 performs various processes by reading and executing programs and data stored in the storage device 14.

The input device 12 is a user interface for receiving input on the estimation apparatus 1 from a user, and is a touch panel, a touch pad, or a keyboard, for example. The display device (display) 13 is controlled by the processor 11 to display a screen of the application for estimation and the like to the user of the estimation apparatus 1.

The storage device 14 includes a main memory and an auxiliary memory. The main memory is a semiconductor memory such as a RAM, for example. The RAM is a volatile storage medium that allows information to be read and written at a high speed, and is used as a storage area and a work area at the time of processing of information by the processor 11. The main memory may include a ROM that is a non-volatile read-only storage medium. In this case, the ROM stores programs of firmware and the like. The auxiliary memory stores various programs, and data that is used by the processor 11 at the time of execution of each program. For example, the auxiliary memory is a hard disk drive, but may be any non-volatile storage or a non-volatile memory as long as information can be stored, and may be removable. For example, the auxiliary memory stores an operating system (OS), middleware, application programs, various pieces of data that may be referred to at the time of execution of the programs, and the like.

The communication device 15 is a wireless LAN module that is capable of transmitting and receiving data to/from another computer such as a user terminal or a server via a network. The communication device 15 may be a wireless communication device such as a Bluetooth (registered trademark) module, or may be a wired communication device such as an Ethernet (registered trademark) module or a USB interface. In one example, the estimation apparatus 1 downloads a program from a server by the communication device 15, and stores the program in the storage device 14. In the case where transmission/reception of data with another computer is not performed, the estimation apparatus 1 does not have to include the communication device 15.

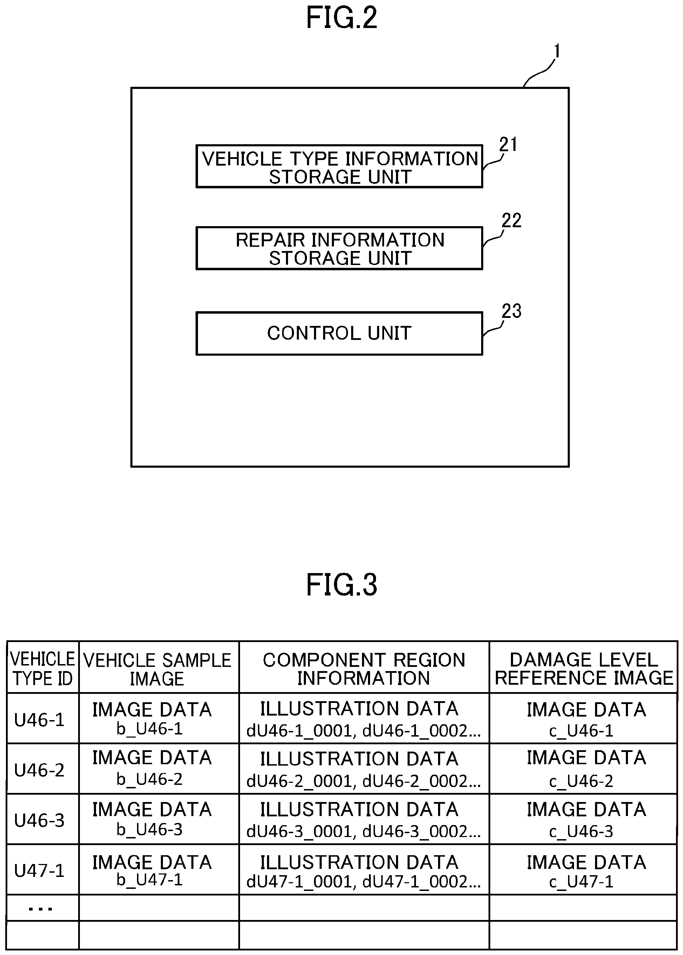

Figure 2 is an example of a functional block diagram of the estimation apparatus 1 of the embodiment of the present invention. The estimation apparatus 1 includes a vehicle type information storage unit 21, a repair information storage unit 22, and a control unit 23. In the present embodiment, these functions are implemented by execution of programs by the processor 11. For example, programs that are executed are programs that are stored in the storage device 14 or that are received via the communication device 15. Various functions are implemented by reading the programs, and thus, one part (function) may be partially or wholly included in another part. These functions may also be implemented by hardware by configuring an electronic circuit or the like for implementing a part or all of each function.

In the present embodiment, the vehicle type information storage unit 21 and the repair information storage unit 22 each include a database function. These functions are implemented by the storage device 14 storing data (such as tables) for various databases and programs, and by the programs being executed. The vehicle type information storage unit 21 stores a vehicle type information table, and thus functions as a database. The repair information storage unit 22 stores a repair information table, and thus functions as a database.

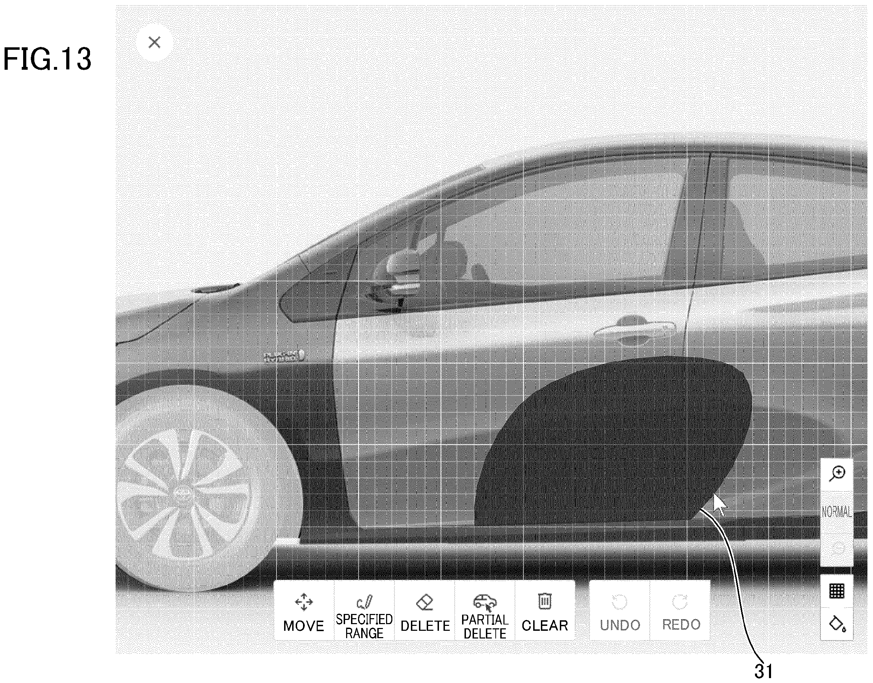

The control unit 23 determines, in relation to an estimation target vehicle that is damaged, a vehicle component that is a repair target and repair details for the vehicle component, and calculates an estimated amount of money necessary to repair the vehicle, based on the vehicle component and the repair details for the vehicle component that are determined. To determine the vehicle component and the repair details for the vehicle component, the control unit 23 determines a damaged range 31 (see Figure 13) of the estimation target vehicle that is damaged and a damage level of the damaged range 31.

Figure 3 is a diagram showing an example of the vehicle type information table. The vehicle type information table stores a vehicle type ID for identifying a vehicle type, and a vehicle sample image corresponding to the vehicle type indicated by the vehicle type ID, the vehicle sample image being stored in association with the vehicle type ID. The vehicle type information table stores pieces of component region information in association with the vehicle type ID, the pieces of component region information each indicating a region of a corresponding vehicle component of a vehicle corresponding to the vehicle type indicated by the vehicle type ID. The vehicle type information table stores, in association with the vehicle type ID, a plurality of damage level reference images for the vehicle corresponding to the vehicle type indicated by the vehicle type ID.

In a vehicle table that is stored in the storage device 14, the vehicle type ID is associated with information about the vehicle type. Information about the vehicle type includes elements such as manufacturer, vehicle name, model, model year, body shape, engine model, grade, and device variations, for example. The vehicle type ID is an example of vehicle type identification information, and may be any type of information as long as the vehicle type can be uniquely identified, and a different vehicle type ID is assigned to a vehicle type whose vehicle type information includes at least one element that is different. Additionally, for the sake of explanation, in the present embodiment, a table is described to store images, illustration data and the like, but instead of storing various images and the like, the table may store paths where various images and the like are stored. For example, the vehicle type information table stores each of various images including the vehicle sample images, damage degree images and the like, but instead of storing the various images, the vehicle type information table may store each of paths where various images are stored. In this case, the control unit 23 may access the various images via the paths. For example, the vehicle type information table stores each of pieces of illustration data of the component region information, but instead of storing each piece of illustration data, the vehicle type information table may store each of paths where respective pieces of illustration data are stored. In this case, the control unit 23 may access each piece of illustration data via the path.

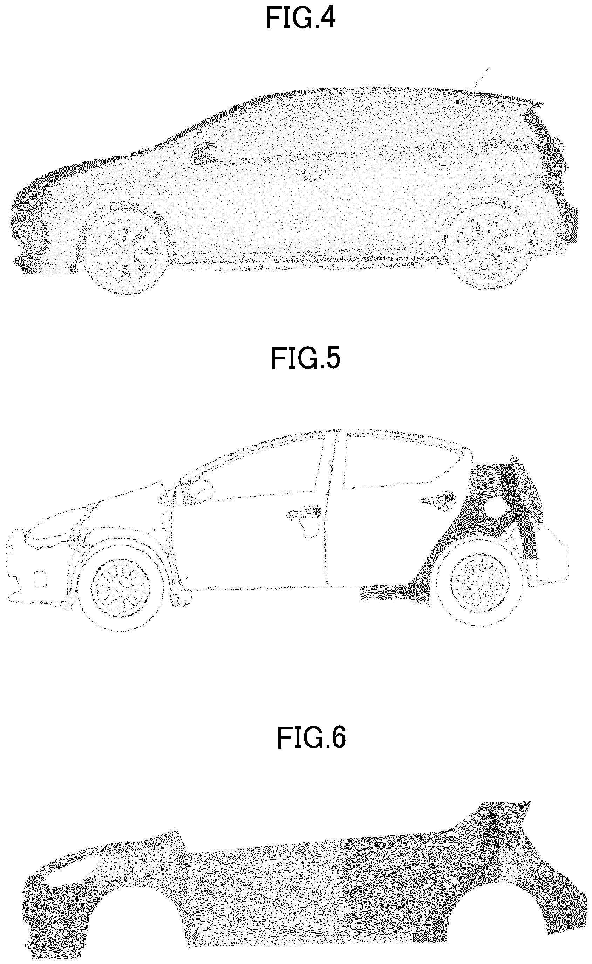

Figure 4 is a diagram showing an example of the vehicle sample image. The vehicle sample image is a sample image showing a vehicle corresponding to a vehicle type. The vehicle type information storage unit 21 stores, in association with a vehicle type ID, a vehicle sample image corresponding to one vehicle type. The vehicle sample image is an image showing the vehicle from a certain angle, and is, for example, an image showing the vehicle from a side as shown in Figure 4. In the present embodiment, for the sake of explanation, the vehicle type information storage unit 21 stores one vehicle sample image for each vehicle type, but as described in a first modification, the vehicle type information storage unit 21 desirably stores a plurality of vehicle sample images for each vehicle type. Additionally, the vehicle type information table may store a same vehicle sample image for vehicle types of vehicles with similar external appearances.

Figures 5 and 6 are diagrams showing examples of the component region information. The component region information is data indicating the shape of a vehicle component using position information such as coordinates. For example, the component region information is data two-dimensionally indicating the region of a vehicle component in the vehicle sample image, and is a vector image. Each vehicle component is associated with a corresponding piece of component region information. The position of a region of a vehicle component indicated by the component region information is associated with a position in the vehicle sample image. For example, the region of a vehicle component indicated by the component region information is expressed using position information such as coordinates set on the vehicle sample image.

Vehicle components are outer skin components such as an outer skin panel that requires bodywork, and components other than the outer skin components, such as headlights and a radiator support. Accordingly, the component region information that is stored in the vehicle type information table is component region information indicating the region of a component other than the outer skin components, or component region information indicating the region of an outer skin component. Figure 5 is the component region information indicating the region of a component other than the outer skin components. Figure 6 is the component region information indicating the region of an outer skin component. Positions of the regions of the vehicle components indicated by the pieces of component region information shown in Figures 5 and 6 are associated with positions in the vehicle sample image shown in Figure 4.

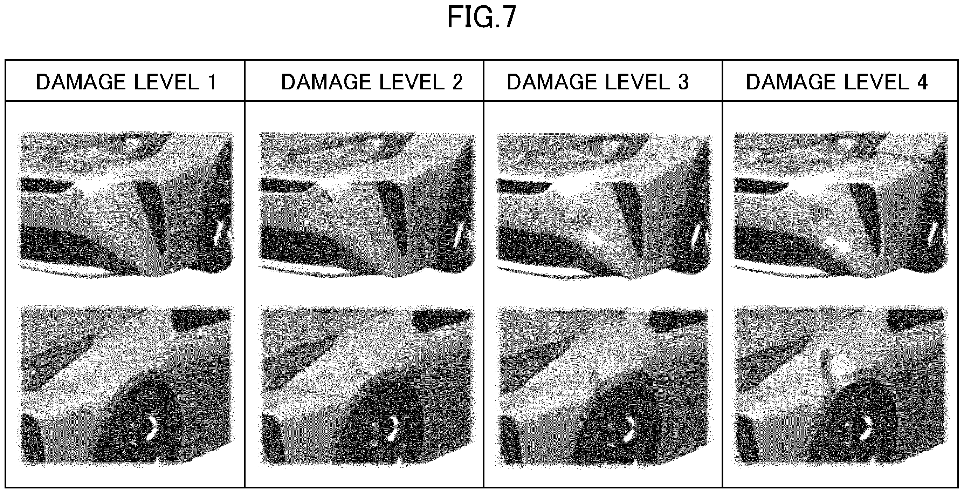

Figure 7 is a diagram showing examples of the damage level reference image. The damage level reference image is an image showing a damaged part of a vehicle, according to a damage level. The damage level indicates the degree of damage on a part of the vehicle or the entire vehicle, and in the present embodiment, the estimation apparatus 1 sets four levels from level 1 with a lowest degree of damage and level 4 with a highest degree of damage as the degrees of damage. A part indicates a portion of a vehicle that is identified based on the external appearance of the vehicle. The damage level reference images include images of each of a plurality of parts at each of the damage levels. However, stages of the damage level set by the estimation apparatus 1 are not limited to those described above, and the estimation apparatus 1 may set the degrees of damage in a plurality of stages other than the four stages. In this case, the damage level reference images are images showing a damaged part of the vehicle, according to the damage levels that are set.

In Figure 7, the damage level reference images include images showing the degrees of damage on a front bumper at damage levels 1 to 4, and images showing the degrees of damage on a front fender at damage levels 1 to 4. The damage level reference images include images of corresponding damage levels of each of a plurality of parts so as to enable a user to easily grasp the damage levels, and the images are arranged next to each other according to the damage levels, on a per-part basis. The damage level reference images may include images of another part, showing damage degrees according to the damage levels 1 to 4, or may include images of the entire external appearance of the vehicle, showing damage degrees according to the damage levels 1 to 4. The damage level reference image is one piece of image data, of a part, including a plurality of images indicating the damage degrees, the images being arranged according to the damage levels. However, the damage level reference images may also include a plurality of pieces of image data associated with one vehicle type ID, and in this case, each piece of image data is data of an image indicating the damage degree of one part corresponding to one level.

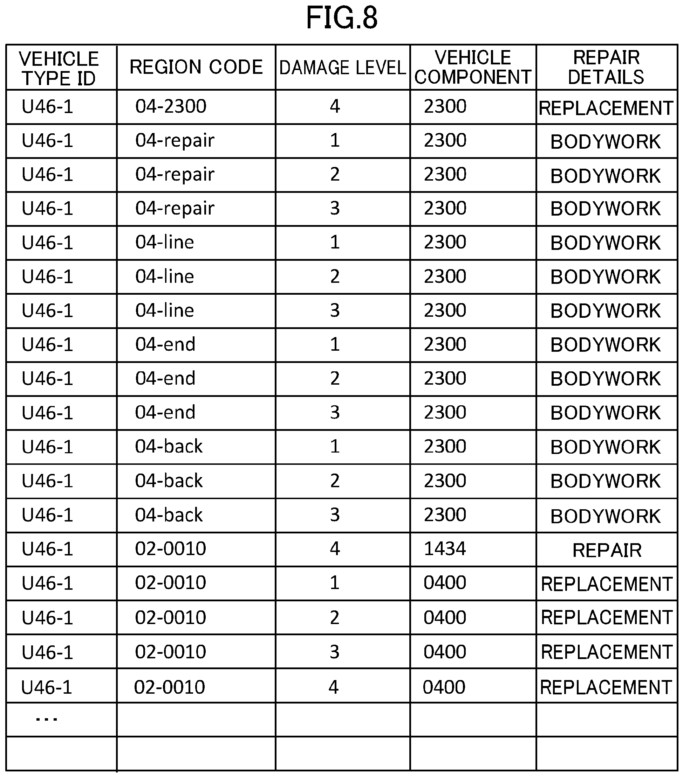

Figure 8 is a diagram showing an example of the repair information table. The repair information table stores a vehicle type ID, a region code, a damage level, a vehicle component, and repair details in association with one another. Each region code is associated with a corresponding piece of component region information. The region code is an example of region identification information for identifying each piece of component region information. As shown in Figure 8, the component region information is associated with a vehicle component at least in the repair information table.

As shown in Figure 8, the repair information table may store, as an element of the vehicle component, a code indicating the vehicle component, or a vehicle component name. As shown in Figure 8, the repair information table may store, as an element of the repair details, "replace", "attach/detach", "repair", "bodywork" or the like, or a code (such as "00", "01" or the like) indicating the repair details. In the present embodiment, in the case where the repair details are "bodywork", the vehicle component that is associated in the repair information table is the outer skin panel.

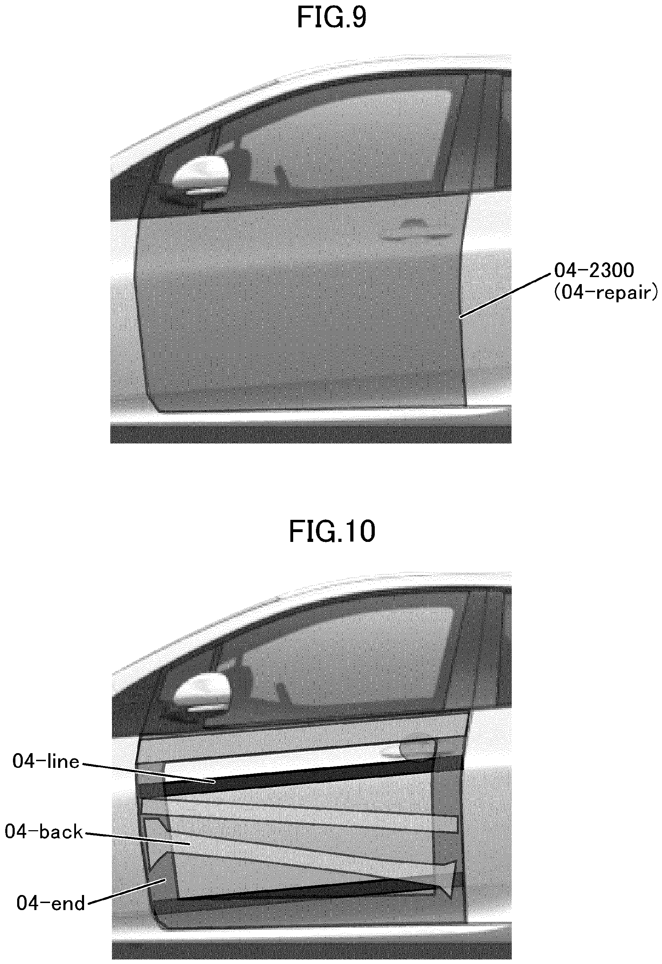

For example, a region code "04-2300" shown in Figure 8 indicates a door panel of a left front door, and a vehicle component "2300" indicates a door panel. For example, a region code "02-0010" shown in Figure 8 indicates a predetermined region of the front bumper, a vehicle component "1434" indicates the radiator support, and a vehicle component "0400" indicates a headlight. Figures 9 and 10 are examples of regions indicated by pieces of component region information corresponding to the region codes. Figure 9 shows the region of the door panel of the left front door corresponding to the region codes "04-2300" and "04-repair" in Figure 8. Figure 10 shows a press line region, an end portion region, and a rear-side work region of the door panel of the left front door respectively corresponding to the region codes "04-line", "04-end", and "04-back" in Figure 8. In one example, the element "bodywork" of the repair details associated with the region code corresponding to the component region information indicating a region of the outer skin component is associated with an index in the repair information table or another table. Alternatively, the repair information table may include information about the index as an element of the repair details.

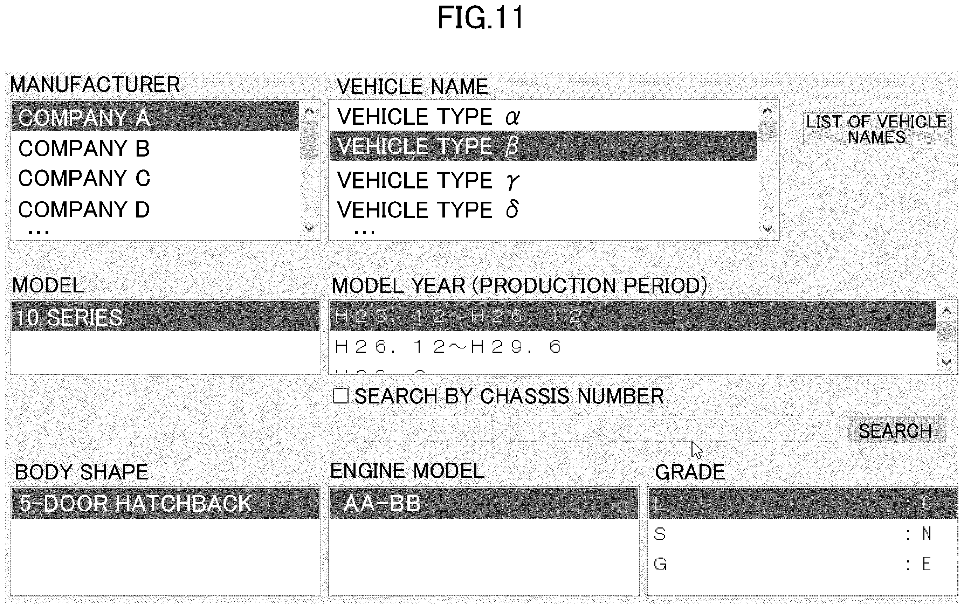

The control unit 23 identifies the vehicle type based on input about the estimation target vehicle that is the target for which an estimate for repair is to be made. Figure 11 is an example of a screen for inputting the vehicle type, displayed on the display device 13 by the control unit 23. The control unit 23 causes a user to perform a selection operation of performing selection and determining, in relation to a vehicle type stored in the vehicle table, each of pieces of information about the vehicle type including manufacturer, vehicle name, model, model year, body shape, engine model, and grade. The control unit 23 identifies the vehicle type (vehicle type ID) based on the information about the vehicle type determined by the user operation. In one example, the control unit 23 causes the user to identify the vehicle type, by causing the user to select an enter button (not shown) or the like after performing selection regarding each of the pieces of information about the vehicle type. The control unit 23 may thereby identify the vehicle type ID.

The control unit 23 acquires, from the vehicle type information storage unit 21, the vehicle sample image, the component region information, and the damage level reference image corresponding to the vehicle type that is identified. In one example, the control unit 23 uses the identified vehicle type ID as a query, and acquires, from the vehicle type information storage unit 21, the vehicle sample image, the component region information, and the damage level reference image that are associated with the vehicle type ID.

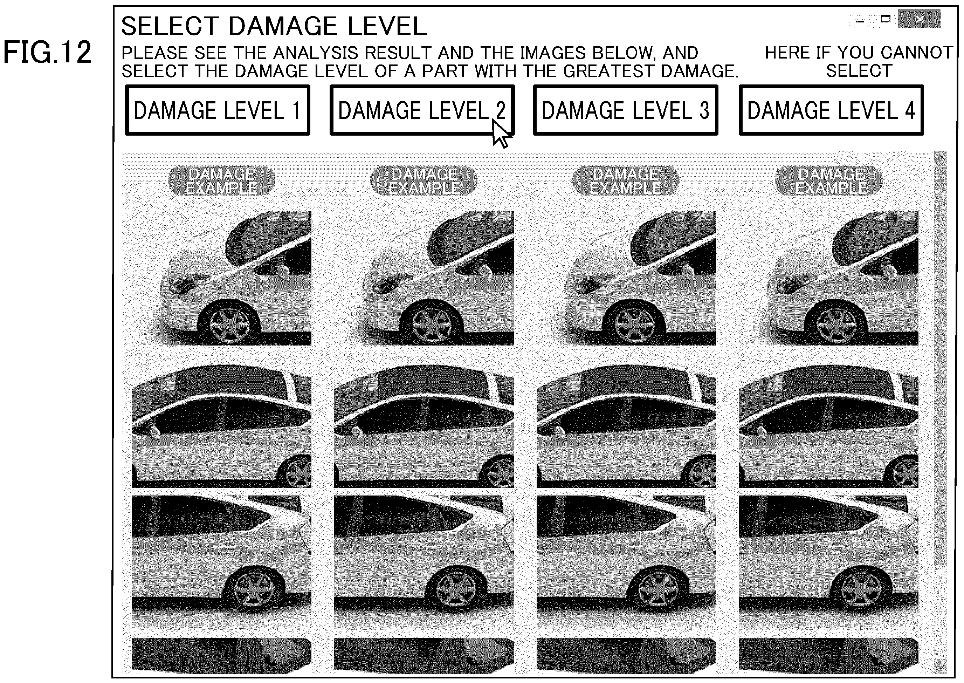

The control unit 23 receives, for the estimation target vehicle, input of the damage level of a damaged part in relation to which the user is to input the damaged range 31. Preferably, the control unit 23 receives input of the damage level of a part, of the estimation target vehicle, that is damaged the most. Figure 12 is an example of a screen where the user is to input the damage level, the screen being displayed on the display device 13 by the control unit 23. The damage level is associated with the damaged range 31 of the estimation target vehicle that is damaged. At the time of receiving input of the damage level, the control unit 23 displays, on the display device 13, the damage level reference images acquired from the vehicle type information storage unit 21. The damage level reference images correspond to the vehicle type identified by the control unit 23, and include a plurality of images corresponding to the damage levels at a plurality of parts. In the case where the damage level reference images do not fit in the screen of the display device 13, the control unit 23 displays the damage level reference images in such a way that the user may check all the images according to user operation, by providing a scroll bar.

The control unit 23 receives input about a region corresponding to a position in the vehicle sample image as input about the damaged range 31. Accordingly, the region of the damaged range 31 is expressed using position information such as coordinates set on the vehicle sample image. The control unit 23 displays the vehicle sample image to make the user input the damaged range 31. To enable the user to more easily input the damaged range 31, the control unit 23 may display a simple illustration of the vehicle instead of the vehicle sample image.

Figure 13 is an example of a screen where the user is to input the damaged range 31, the screen being displayed on the display device 13 by the control unit 23. In the present embodiment, the control unit 23 stores a plurality of positions in the vehicle sample image according to a mouse operation by the user, and receives a region inside a boundary set by the plurality of positions that are stored, as input of the damaged range 31. In one example, the control unit 23 stores a position of a mouse pointer at the time of clicking by the user as a boundary position. In one example, the control unit 23 stores the boundary position by taking, as the boundary position, positions of the mouse pointer that is moved by the user while being clicked.

The control unit 23 determines whether the region indicated by each piece of component region information acquired from the vehicle type information storage unit 21 and the damaged range 31 that is input overlap each other. The component region information and the damaged range 31 that is input both include region information corresponding to a position in the vehicle sample image. The control unit 23 may perform the determination of overlap using a known method. In the present embodiment, the control unit 23 performs the determination of overlap by determining, for each piece of component region information acquired from the vehicle type information storage unit 21, whether the region indicated by the component region information is at least partially included in the damaged range 31 that is input. In one example, the control unit 23 performs the determination of overlap by determining whether one of a plurality of boundary positions forming the component region information is included in the damaged range 31 that is input.

The control unit 23 may also perform the determination of overlap by determining, with respect to each piece of component region information acquired from the vehicle type information storage unit 21, whether the damaged range 31 that is input partially overlaps the region indicated by the component region information. Furthermore, the control unit 23 may also perform the determination of overlap by determining whether the region indicated by the component region information is at least partially included in the damaged range 31 that is input, whether the damaged range 31 that is input is at least partially included in the component region information that is acquired, and by determining overlap in the case where the two determination results are satisfied. The process of determination of overlap by the control unit 23 described above is merely an example, and may be freely changed within the gist of the invention. For example, the component region information may be a raster image or the like instead of a vector image, and the control unit 23 may perform the determination of overlap in any manner according to the image format.

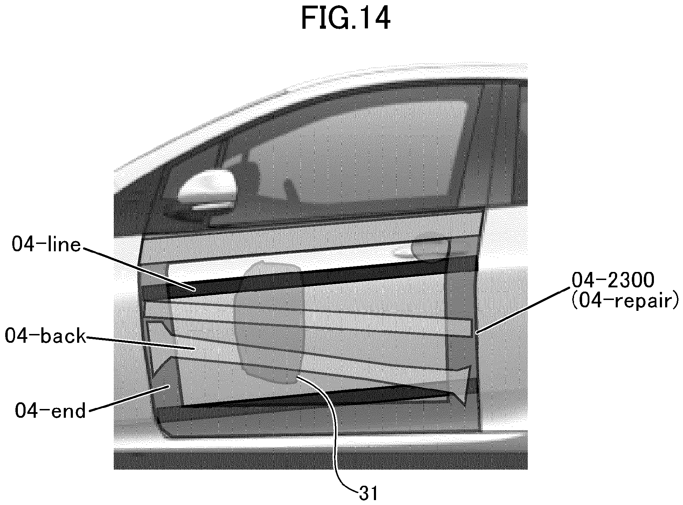

The control unit 23 determines the region code corresponding to the component region information indicating the region that is determined to be overlapped. Figure 14 is a diagram for describing determination of overlap between the damaged range 31 and a region indicated by each piece of component region information. The control unit 23 determines that regions corresponding to the region codes "04-2300", "04-repair", "04-line", and "04-back" overlap the damaged range 31. The control unit 23 determines a vehicle component and repair details for the vehicle component based on the vehicle type ID that is identified, the region codes that are determined, and the damage level that is input that are associated with one another in the repair information table. In one example, the control unit 23 acquires the vehicle component and the repair details for the vehicle component that are associated, in the repair information table, with the vehicle type ID that is identified, the region codes that are determined, and the damage level that is input. In this case, for example, the control unit 23 uses the vehicle type ID that is identified, the region codes that are identified, and the damage level that is input, as queries, and acquires the vehicle component and the repair details that are associated therewith from the repair information storage unit 22. The control unit 23 determines the vehicle component and the repair details acquired from the repair information storage unit 22 as the vehicle component as the repair target and the repair details for the vehicle component. In one example, in the case where the repair details for the vehicle component is "bodywork", the repair details for the vehicle component determined by the control unit 23 include an index of bodywork.

For example, in Figure 14, in the case where the received damage level is any of "1" to "3", the control unit 23 determines, based on the repair information table shown in Figure 8, the vehicle component and the repair details that are associated with "04-repair", "04-line", and "04-back" as the vehicle component as the repair target and the repair details for the vehicle component. Furthermore, in Figure 14, in the case where the received damaged level is "4", the control unit 23 determines, based on the repair information table shown in Figure 8, the vehicle component and the repair details that are associated with "04-2300" as the vehicle component as the repair target and the repair details for the vehicle component.

The storage device 14 stores a cost (a component price) of each object that is a vehicle component that is a potential replacement target, in association with the vehicle component. The storage device 14 stores an index of replacement work of a vehicle component in association with a vehicle component that is a potential replacement target. Accordingly, in the case where the repair details for a vehicle component that is determined to be the repair target are "replace", the control unit 23 may determine the component price and the index of the vehicle component. Furthermore, the storage device 14 stores an index of attachment/detachment work of a vehicle component in association with a vehicle component that is a potential attachment/detachment target. Accordingly, in the case where the repair details for a vehicle component that is determined to be the repair target are "attach/detach", the control unit 23 may determine the index of the vehicle component. Furthermore, the storage device 14 stores an index of repair work of a vehicle component in association with a vehicle component that is a potential repair target. Accordingly, in the case where the repair details for a vehicle component that is determined to be the repair target are "repair", the control unit 23 may determine the index of the vehicle component. Moreover, in the case where the repair details for a vehicle component that is determined to be the repair target are "bodywork", the control unit 23 may determine the index of the bodywork based on the index associated with the element "bodywork" of repair details in the repair information table. The index mentioned above indicates a repair work time for replacement or repair of an object. The storage device 14 also stores a labor rate. The control unit 23 calculates the estimated amount of money based on the component price and the index of a vehicle component that are determined based on the vehicle component and the repair details for the vehicle component that are determined, and on the labor rate. Any known calculation method may be used by the control unit 23 to calculate the estimated amount of money after the vehicle component and the repair details are determined.

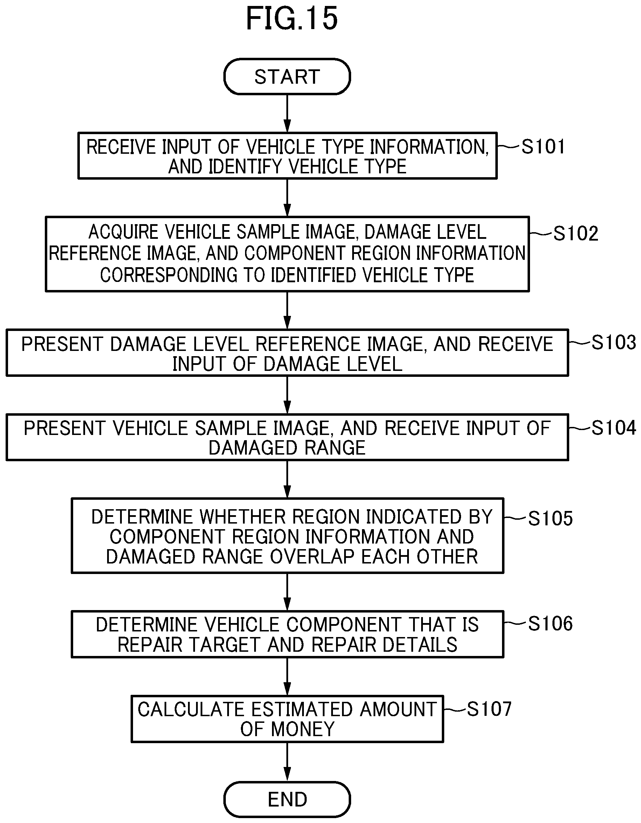

Figure 15 is a flowchart describing information processing that is performed by the estimation apparatus 1 of the embodiment of the present invention. When the application for estimation is executed and calculation of the estimated amount of money is started, the estimation apparatus 1 displays an input receiving screen as shown in Figure 11.

The control unit 23 receives input of information about the vehicle type from the user via the input receiving screen, and identifies the vehicle type ID based on the information about the vehicle type that is input (step 101).

Next, the control unit 23 acquires, from the vehicle type information storage unit 21, the vehicle sample image, the component region information, and the damage level reference image that are associated with the vehicle type ID that is identified (step 102).

Next, the control unit 23 displays, on the display device 13, a screen including the damage level reference images acquired from the vehicle type information storage unit 21, and receives input of the damage level corresponding to the damaged range 31 from the user via the screen (step 103).

Next, the control unit 23 displays, on the display device 13, a screen including the vehicle sample image, and receives, as input of the damaged range 31, input about a region corresponding to a position in the vehicle sample image from the user via the screen (step 104).

Next, the control unit 23 determines whether the region indicated by each piece of component region information acquired from the vehicle type information storage unit 21 overlaps the damaged range 31 that is input (step 105). More specifically, in step 105, the control unit 23 performs the determination of overlap by determining at least one of whether the region indicated by the component region information that is acquired is at least partially included in the damaged range 31 that is input, and whether the damaged range 31 that is input is at least partially included in the component region information that is acquired.

Next, the control unit 23 determines the vehicle component and the repair details for the vehicle component based on the region that is determined to be overlapped (step 106). More specifically, in step 106, the control unit 23 determines the region code corresponding to the component region information, and acquires the vehicle component and the repair details that are associated, in the repair information table, with the region code that is determined, the vehicle type ID that is identified, and the damage level that is input. The control unit 23 determines the vehicle component and the repair details that are acquired, to be the vehicle component as the repair target and the repair details for the vehicle component.

Next, the control unit 23 calculates the estimated amount of money based on the vehicle component and the repair details for the vehicle component that are determined (step 107). More specifically, in step 107, the control unit 23 calculates the estimated amount of money based on the component price and the index of the vehicle component that are determined based on the vehicle component and the repair details for the vehicle component that are determined, and on the labor rate. In step 107, the control unit 23 may calculate an estimated amount of money that is a total of every estimated amount of money calculated in relation to the component price and the index of vehicle component.

Next, effects of the estimation apparatus 1 according to the embodiment of the present invention will be described. In the present embodiment, the estimation apparatus 1 includes the vehicle type information storage unit 21, the repair information storage unit 22, and the control unit 23. The vehicle type information storage unit 21 stores, in association with a vehicle type ID, pieces of component region information each indicating the region of a vehicle component of a vehicle corresponding to the vehicle type indicated by the vehicle type ID. The repair information storage unit 22 stores a vehicle component and repair details for the vehicle component, in association with the vehicle type ID, the region code, and the damage level. When the vehicle type ID is identified, the control unit 23 acquires, from the vehicle type information storage unit 21, the vehicle sample image, the component region information, and the damage level reference image that are associated with the vehicle type ID that is identified. The control unit 23 displays a screen including the damage level reference image on the display device 13, and receives input of the damage level from the user. According to such a configuration, the user is enabled to input the damage level of an estimation target vehicle while checking the degree of damage on a vehicle according to each damage level, and the user may more easily perform input.

Furthermore, in the present embodiment, the control unit 23 displays a screen including the vehicle sample image on the display device 13, and receives, as input of the damaged range 31, input from the user about a region corresponding to a position in the vehicle sample image. At this time, the user may input the damaged range 31 by drawing, on the vehicle sample image displayed on the screen, a region corresponding to a damaged part of the estimation target vehicle. The user may draw a boundary of the damaged range 31, for example, by mouse operation. According to such a configuration, the user is enabled to input the damaged range 31 of the estimation target vehicle by specifying a position on the sample image showing a vehicle, while checking the degree of damage on the vehicle, and the user may more easily perform input.

The control unit 23 determines whether the region indicated by each piece of component region information acquired from the vehicle type information storage unit 21 and the damaged range 31 that is input overlap each other. The control unit 23 determines the vehicle component that is the repair target and the repair details for the vehicle component, based on vehicle identification information corresponding to the vehicle type that is identified, the region code corresponding to the component region information indicating the region that is determined to be overlapped, and the damage level that is input that are stored in association with one another in the repair information storage unit 22. In this manner, in the case where the vehicle type is identified, when the user inputs the damage level and the damaged range 31, the control unit 23 determines the vehicle component that is the repair target and the repair details for the vehicle component using the repair information storage unit 22, and thus, the user does not have to identify the vehicle component or a vehicle part. According to such a configuration, the user is enabled to more easily determine the vehicle component that is the repair target and the repair details for the vehicle component, by using the estimation apparatus 1. The control unit 23 calculates the estimated amount of money based on the component price and the index of the vehicle component that are determined based on the vehicle component and the repair details for the vehicle component that are determined, and on the labor rate, and thus, in the present embodiment, the user may more easily calculate the estimated amount of money by using the estimation apparatus 1.

The effects described above may be achieved in other embodiments and other examples unless stated otherwise. Modifications described below are also embodiments of the present invention, and also in the modifications below, the estimation apparatus 1 may also enable the user to perform input more easily.

In a first modification of the present invention, the vehicle type information storage unit 21 stores a plurality of vehicle sample images corresponding to one vehicle type, or in other words, a plurality of vehicle sample images that are associated with one vehicle type ID. The plurality of vehicle sample images that are associated with one vehicle type ID include one reference image, and a selected image showing a vehicle seen from a different angle from the reference image. The reference image is an image showing the vehicle from a side, and the selected image includes at least one image among an image showing the vehicle seen from a front side, an image showing the vehicle seen from a rear side, and an image of the vehicle seen from above. The reference image is an image showing the vehicle seen from a side, but may alternatively be an image showing the vehicle seen from any given direction.

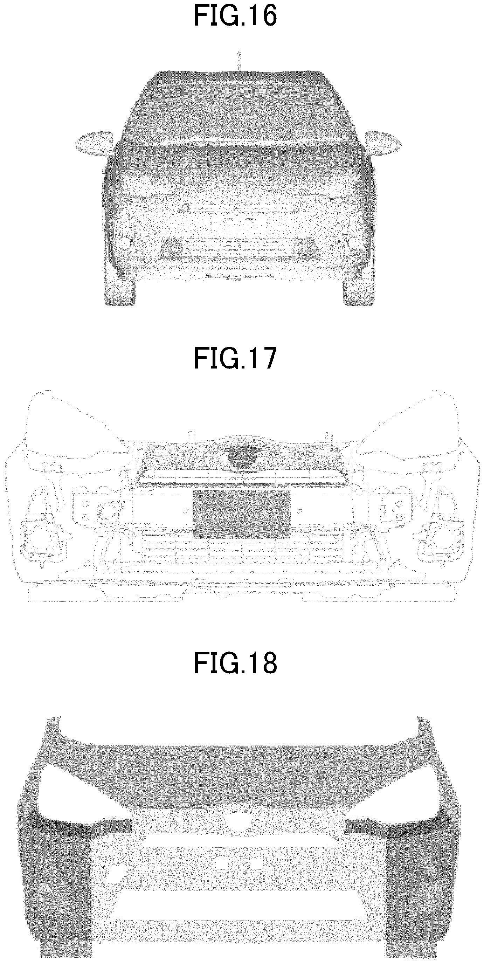

Figure 16 is a diagram showing an example of the vehicle sample image according to the first modification. Figure 16 is an image showing the vehicle seen from the front side, and is an example of the selected image. Figure 4 is an image showing the vehicle seen from a side, and is an example of the reference image. Figures 17 and 18 are diagrams each showing an example of the component region information according to the first modification. Positions of the regions of the vehicle components indicated by the component region information shown in Figures 17 and 18 are associated with positions in the vehicle sample image shown in Figure 16. The position of a region indicated by the component region information is associated with a position in at least one image between the reference image and the selected image depending on the position of the region of the vehicle component indicated by the component region information. The position of a region indicated by the component region information may be associated with positions in both the reference image and the selected image.

In the first modification, at the time of acquiring the vehicle sample image corresponding to the vehicle type that is identified, from the vehicle type information storage unit 21, the control unit 23 acquires the reference image and the selected image from the vehicle type information storage unit 21. The control unit 23 displays, on the display device 13, the reference image or the selected image acquired from the vehicle type information storage unit 21, and receives, as input of the damaged range 31, input from the user about a region corresponding to a position on the reference image or the selected image that is displayed. In the case of receiving input of the damaged range 31, the image that is first displayed on the display device 13 by the control unit 23 is the reference image. The control unit 23 displays the reference image acquired from the vehicle type information storage unit 21 on the display device 13 and receives input of the damaged range 31, and in the case where the damaged range 31 that is input is within a predetermined range, the control unit 23 displays, on the display device 13, a message window 32 encouraging switching to an image showing the vehicle seen from another angle. In this case, the image showing the vehicle seen from another angle is the selected image. The predetermined range includes a region of a front part of the vehicle in the reference image.

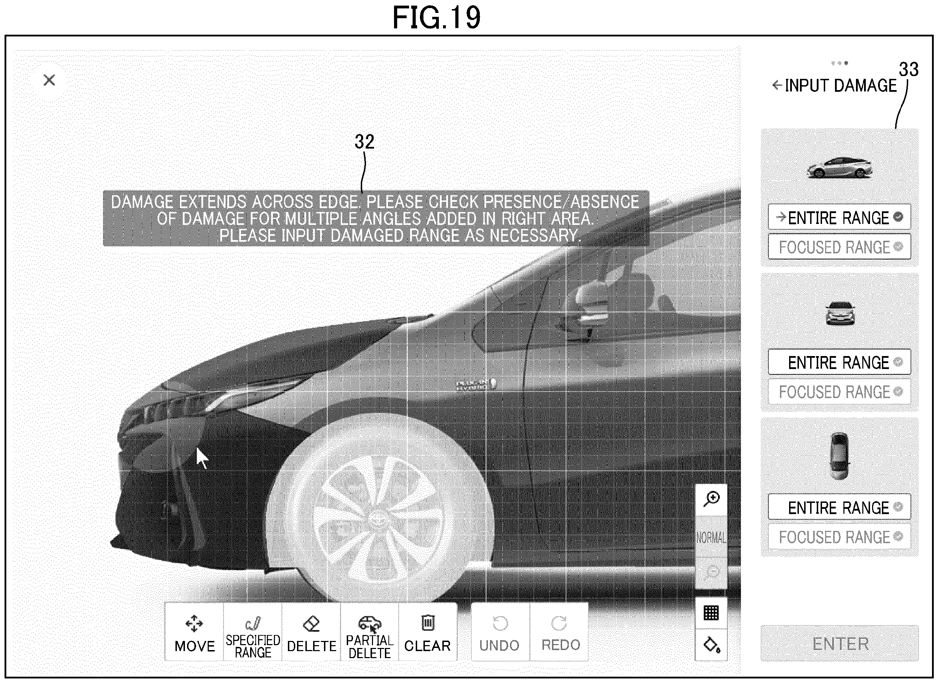

Figure 19 is an example of a screen where the user is to input the damaged range 31, the screen being displayed on the display device 13 by the control unit 23, the screen including a display encouraging switching to a selected image. The screen where the user is to input the damaged range 31 includes a switching window 33 used to select which of the vehicle sample images showing the vehicle seen from the side, the front side, and above is to be displayed. The switching window 33 displays an icon or the like, such as an icon, an image, or text used to switch the vehicle sample image. In response to input from the user, the control unit 23 displays, on the display device 13, the selected image according to a selection operation performed by the user on the icon or the like in the switching window 33, for example, and receives input of the damaged range 31. The switching window 33 includes the reference image and the selected image acquired from the vehicle type information storage unit 21, and thus, includes the vehicle sample images showing the vehicle seen from a plurality of angles. Additionally, the predetermined range may include at least one of regions of the front part and the rear part of the vehicle in the vehicle sample image.

In the first modification, according to such a configuration, the user is enabled to input the damaged range 31 in relation to the vehicle seen from a plurality of angles, and the damaged range 31 may be more accurately input. The position of a region of the vehicle component indicated by the component region information corresponds to a position in one or some or all of the vehicle sample images among the plurality of vehicle sample images. Accordingly, the control unit 23 may determine, for each of a plurality of vehicle sample images associated with the vehicle type ID that is identified, whether the region indicated by each piece of component region information acquired from the vehicle type information storage unit 21 and the damaged range 31 that is input overlap each other. According to the configuration as described above, the control unit 23 may more accurately determine the vehicle component and the repair details for the vehicle component.

In a second modification of the present invention, the repair information storage unit 22 further stores, in association with a vehicle component and repair details for the vehicle component, a concomitant vehicle component and repair details for the concomitant vehicle component, repair of the concomitant vehicle component being necessary concomitantly with the vehicle component and the repair details for the vehicle component. The repair information storage unit 22 may perform storage in a table other than the repair information table, or may perform storage in the repair information table. The repair information storage unit 22 may store the concomitant vehicle component and the repair details for the concomitant vehicle component in association with the vehicle type ID, the region code, and the damage level. The control unit 23 determines, based on a vehicle component and repair details for the vehicle component that are determined, the concomitant vehicle component and the repair details for the concomitant vehicle component that are associated therewith in the repair information storage unit 22. The control unit 23 calculates an estimated amount of money related to the concomitant vehicle component based on a component price and an index of the concomitant vehicle component determined based on the concomitant vehicle component and the repair details for the concomitant vehicle component that are determined, and on a labor rate. The control unit 23 calculates the estimated amount of money by adding up the estimated amount of money related to the vehicle component, and the estimated amount of money related to the concomitant vehicle component. According to the configuration as described above, the control unit 23 may more accurately determine the vehicle component and the repair details for the vehicle component.

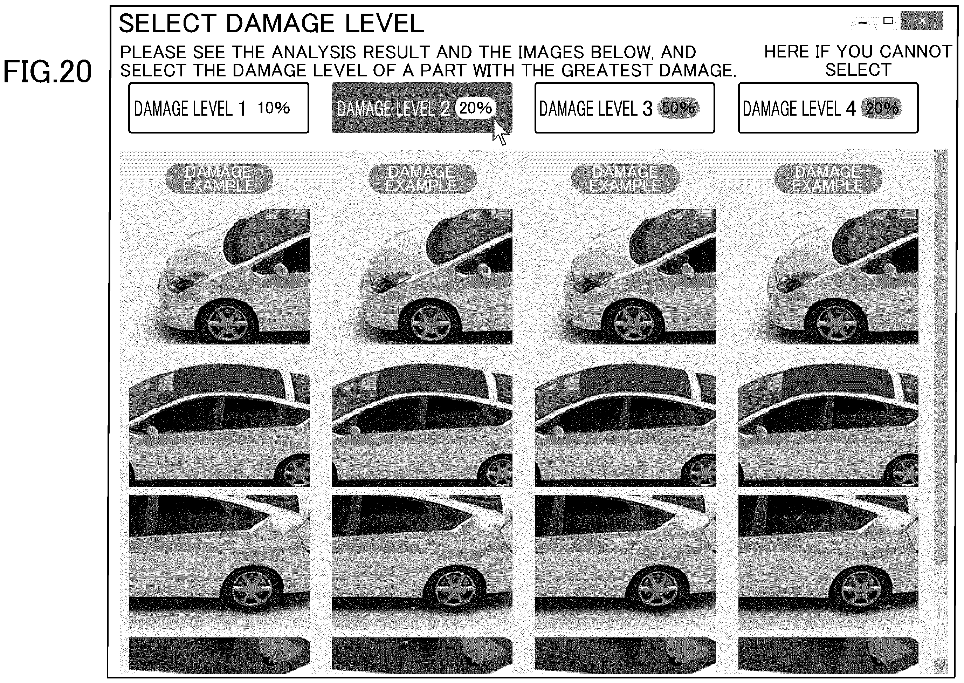

In a third modification of the present invention, the control unit 23 determines likelihood of a damage level in a captured image that is input, using a learning model. In one example, the control unit 23 may perform learning of a learning model stored in a server apparatus and may use the learning model by communicating with the server apparatus via the communication device 15. The server apparatus may be a cloud server. The server apparatus stores a learning model obtained by learning captured images of a vehicle that are categorized based on the damage level. The captured images of a vehicle that are learned are images that are obtained by capturing the vehicle from various angles, and when a captured image of an unknown vehicle is input, the learning model infers the damage level in the captured image, or in other words, the damage level of a vehicle indicated by the captured image. The control unit 23 determines the likelihood (probability) of the damage level to which the damage level of a vehicle indicated in the captured image that is input corresponds, by using the learning model. To receive input of a damage level from a user, the control unit 23 displays, on the display device 13, the determined likelihood of the damage level as suggestion information to the user. Figure 20 is an example of a screen according to the third modification, where the user is to input the damage level, the screen being displayed on the display device 13 by the control unit 23. In Figure 20, it is indicated that the probability of the damage level of a vehicle indicated in the captured image that is input being damage level 3 is 50% and is the greatest, and the control unit 23 displays damage level 3 as the suggestion information. According to such a configuration, the user may input the damage level while referring to the suggestion information. Accordingly, the user may more easily perform input. Moreover, in the third modification, the control unit 23 may identify the vehicle part in the captured image that is input, by using a learning model. In this case, the server apparatus stores a learning model obtained by learning captured images of a vehicle that are categorized based on the vehicle part. The vehicle part is a front part, a rear part, a side part or the like, for example. The captured image of a vehicle that are learned are images that are obtained by capturing the vehicle from various angles, and when a captured image of an unknown vehicle is input, the learning model infers the vehicle part in the captured image. The control unit 23 determines the likelihood (probability) of the vehicle part indicated in the captured image that is input, by using the learning model, and categorizes the vehicle part into a type that is set in advance, according to a level of the likelihood.

In a fourth modification of the present invention, the control unit 23 does not receive input, through user operation, about an estimation target vehicle that is a target for which an estimate for repair is to be made. The control unit 23 identifies the vehicle type ID of the estimation target vehicle based on information about the vehicle type received from another system or apparatus via the communication device 15.

In a fifth modification of the present invention, the vehicle type information storage unit 21 does not store the vehicle sample image corresponding to the vehicle type. Accordingly, the control unit 23 does not acquire the vehicle sample image from the vehicle type information storage unit 21. The storage device 14 stores a general vehicle sample image that does not correspond to a vehicle type, and the control unit 23 displays the general vehicle sample image on the display device 13 at the time of causing the user to input the damaged range 31. Also in the fifth modification, the user is enabled to input the damaged range 31 of the estimation target vehicle by specifying a position on the sample image showing a vehicle, while checking the degree of damage on the vehicle, and the user may more easily perform input.

In a sixth modification of the present invention, after receiving input of a damage level and receiving input of the damaged range 31 corresponding to the damage level, the control unit 23 may further receive input of a damage level and receive input of the damaged range 31 corresponding to the damage level. In this manner, the control unit 23 may repeatedly perform the processes of steps 103 and 104 in the flowchart shown in Figure 15. According to such a configuration, the control unit 23 may more accurately determine the vehicle component and the repair details for the vehicle component. Alternatively, in an example modification of the sixth modification, the control unit 23 changes the order of the steps in the flowchart shown in Figure 15, and receives input of a damage level corresponding to a damaged range 31 after receiving input of the damaged range 31. Also in this case, the control unit 23 may repeatedly perform the processes of steps 104 and 103 in the flowchart shown in Figure 15.

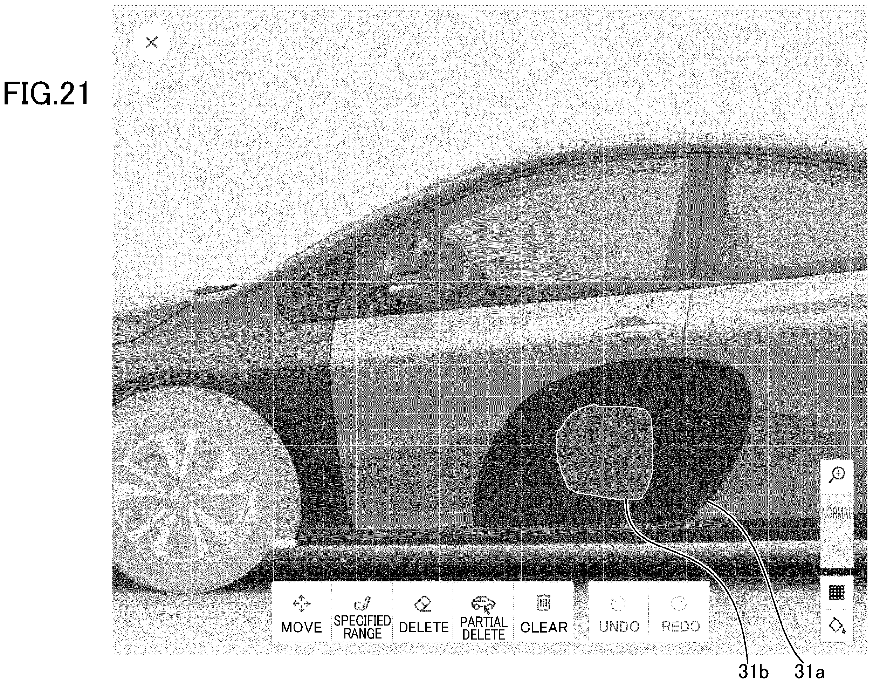

In a seventh modification of the present invention, at the time of receiving input of the damaged range 31, the control unit 23 receives input of the damaged range 31 for each of a plurality of stages indicating relative levels of damage. According to such a configuration, the user is enabled to input the damaged ranges 31 on the vehicle sample image according to a plurality of stages, and the user is enabled to more easily perform input. Figure 21 is an example of a screen according to the seventh modification, where the user is to input the damaged range, the screen being displayed on the display device 13 by the control unit 23. The control unit 23 may, after receiving input of a first damaged range 31a, receive input of a second damaged range 31b within the first damaged range 31a. For example, in this case, if the damage level received by the control unit 23 is damage level 2, the control unit 23 may associate the first damaged range 31a with damage level 2, and associate the second damaged range 31b with damage level 3. In another example, the control unit 23 may, after receiving input of a first damaged range 31a, receive input of a second damaged range 31b that surrounds the first damaged range 31a. For example, in this case, if the damage level received by the control unit 23 is damage level 2, the control unit 23 may associate the first damaged range 31a with damage level 2, and associate the second damaged range 31b with damage level 1.

In an eighth modification of the present invention, the vehicle type information storage unit 21 does not store the damage level reference image, and the repair information storage unit 22 does not store the damage level. The control unit 23 does not receive input of the damage level, but receives input of the damaged range 31. In this case, the damaged range 31 is not associated with the damage level. The control unit 23 determines the vehicle component that is the repair target and the repair details for the vehicle component based on the vehicle identification information corresponding to the vehicle type that is identified and the region code corresponding to the component region information indicating a region that is determined to be overlapped, that are associated with each other in the repair information storage unit 22. In this case, the control unit 23 performs step 104 in Figure 15 without performing step 103. Also in the eighth modification, the user is enabled to input the damaged range 31 of the estimation target vehicle by specifying a position on the sample image showing a vehicle, while checking the degree of damage on the vehicle, and the user may more easily perform input. In the eighth modification, the estimated amount of money according to the damage level cannot be calculated, but at the time of performing simple calculation, the user may more easily determine the vehicle component that is the repair target and the repair details for the vehicle component and calculate the estimated amount of money, by using the estimation apparatus 1.

In a ninth modification of the present invention, the estimation apparatus 1 does not include the repair information storage unit 22. The component region information includes, in addition to data indicating the shape of a vehicle component, information about the vehicle component. The control unit 23 determines the vehicle component and the repair details for the vehicle component based on a region that is determined to be overlapped. In one example, the control unit 23 determines the vehicle component by using the information about the vehicle component included in the component region information indicating the region that is determined to be overlapped. In this case, the control unit 23 determines the damage level based on at least one of shape and size of the entire region that is determined to be overlapped, and determines the repair details for the vehicle component. Also in the ninth modification, the user is enabled to input the damaged range 31 of the estimation target vehicle by specifying a position on the sample image showing a vehicle, while checking the degree of damage on the vehicle, and the user may more easily perform input. In the ninth modification, the estimated amount of money according to the damage level cannot be calculated, but at the time of performing simple calculation, the user may more easily determine the vehicle component that is the repair target and the repair details for the vehicle component and calculate the estimated amount of money, by using the estimation apparatus 1.

In a tenth modification of the present invention, the number of pieces of component region information that are stored in the vehicle type information storage unit 21 in association with one vehicle type ID is one. One piece of component region information includes data indicating the shape of each vehicle component, and each piece of data about the vehicle component is identifiable, and is associated with the region code.

In an eleventh modification of the present invention, the repair information table does not store the vehicle type ID. The storage device 14 stores the repair information table for each vehicle type ID, and the control unit 23 determines the vehicle component and the repair details for the vehicle component using the repair information table corresponding to the vehicle type ID that is identified.

In a twelfth modification of the present invention, the input device 12 and the display device 13 are implemented by a touch panel, and the control unit 23 causes the user to input the damaged range 31 through a touch operation of the user on the touch panel. For example, in response to a touch operation of the user, the control unit 23 draws a boundary of the damaged range 31 and receives a region inside the boundary as the damaged range 31 that is input. According to such a configuration, the user is enabled to more intuitively input the damaged range 31, and thus, the user is enabled to more easily perform input.

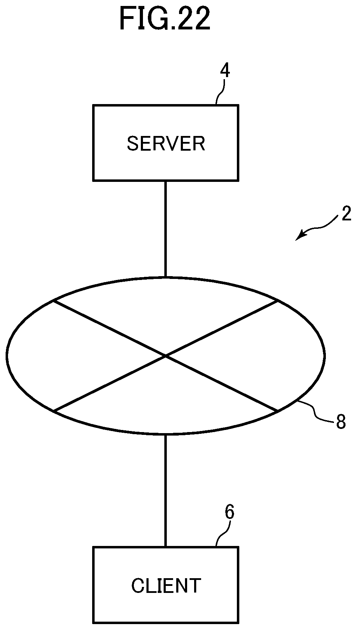

In a thirteenth modification of the present invention, the estimation apparatus 1 is implemented by a server-client system. In the thirteenth modification, an estimation system 2 includes a server 4, and one or more clients 6. These are connected to each other over a network 8. Figure 22 is a diagram showing an example of an overall configuration of the estimation system 2 of the thirteenth modification. The server 4 includes the vehicle type information storage unit 21, the repair information storage unit 22, and the control unit 23, and the client 6 includes a function of communicating with the server 4, and functions as a thin client terminal. Alternatively, the client 6 may include a part of functions of the server 4. The estimation apparatus 1 in each embodiment may be implemented by the estimation system 2 of the present modification to the extent that no conflict exists.

In a fourteenth modification of the present invention, the storage device 14 stores an index table, and the index in the case where the determined repair details for the vehicle component that is the repair target are "bodywork" is determined based on the index table (not shown). Generally, in the case where the repair details are "bodywork", the vehicle component that is the repair target is an outer skin panel, and thus, the index table is for determining the index of the outer skin panel. In the fourteenth modification, elements of repair details for a vehicle component in the repair information table do not include the index of bodywork, and also, the index of bodywork is not associated therewith. The index table is a table associating the index with a difficulty ranking and the range of an area of a damaged range. The difficulty ranking is an indication indicating the degree of difficulty of repair in the case where the repair details are "bodywork", and is associated, for each vehicle component, with each combination of a plurality of region codes. The difficulty ranking may also be associated with one region code. The difficulty ranking may be determined based on a difficulty ranking table associating, for each vehicle component, one region code and each combination of a plurality of region codes with a difficulty ranking, or may be determined by determining whether each of the region codes is included or not. For example, the control unit 23 determines the difficulty ranking in such a way that a degree of difficulty is "B" in a case where the region code corresponding to the component region information indicating a region that is determined to be overlapped with the damaged range 31 that is input includes "04-line" or "04-end", and that the degree of difficulty is "C" in a case where "04-back" is further included. Moreover, in the case where the determined repair details for the vehicle component that is the repair target are "bodywork", the control unit 23 calculates the area of the region of the damaged range 31 that is input. At this time, the control unit 23 may calculate the area by using the vehicle sample image and information that is associated with the vehicle type ID. Preferably, the control unit 23 calculates the area for each vehicle component (outer skin panel) by further using the component region information.

In the fourteenth modification, in the case where the determined repair details for the vehicle component that is the repair target are "bodywork", the control unit 23 determines, in relation to the vehicle component and the repair details, the difficulty ranking in the manner described above based on one or a plurality of region codes corresponding to the component region information indicating the region that is determined to be overlapped with the damaged range 31. Then, the control unit 23 acquires, in relation to the vehicle component and the repair details, the index that is associated, in the index table, with the determined difficulty ranking and the range of an area corresponding to the calculated area, and determines the index as the index related to bodywork of the vehicle component. The control unit 23 calculates the estimated amount of money in relation to the vehicle component and the repair details, by using the determined index and the labor rate. Additionally, in the fourteenth modification, the index table may be stored in an apparatus other than the estimation apparatus 1, instead of in the storage device 14. In this case, the estimation apparatus 1 communicates with a database server or the like storing the index table, transmits information about one or a plurality of region codes determined by the control unit 23, and receives the index corresponding to region code(s).

The modifications described above may be combined as appropriate to achieve a certain embodiment of the present invention or may be applied to a certain embodiment to the extent that no conflict exists.

An embodiment of the present invention may be an electronic device or a program for implementing the functions of the embodiments of the present invention described above or the information processing indicated by the flowchart, or may be a computer-readable storage medium storing the program. Furthermore, another embodiment may be a method of implementing the functions of the embodiments of the present invention described above or the information processing indicated by the flowchart. Moreover, another embodiment may be a server that is capable of supplying, to a computer, a program for implementing the functions of the embodiments of the present invention described above or the information processing indicated by the flowchart. Moreover, another embodiment may be a virtual machine for implementing the functions of the embodiments of the present invention described above or the information processing indicated by the flowchart.

The processes and operations described above may be freely changed so long as there is no inconsistency related to the processes or operations, such as use of data in a step in which the data is not yet available. Furthermore, each embodiment described above is an example for explaining the present invention, and the present invention is not limited to these embodiments. For example, the manner of storage of data in each storage unit or database is merely an example, and may be freely changed within the gist of the invention. The present invention may be carried out in various modes within the gist of the invention.

### Reference Signs List

- 1: estimation apparatus
- 2: estimation system
- 4: server
- 6: client
- 8: network
- 11: processor
- 12: input device
- 13: output device
- 14: storage device
- 15: communication device
- 16: bus
- 21: vehicle type information storage unit
- 22: repair information storage unit
- 23: control unit
- 31: damaged range
- 32: message window
- 33: switching window

## Claims

1. An estimation apparatus for calculating an estimated amount of money necessary to repair a vehicle, the estimation apparatus comprising a vehicle type information storage unit for storing, in association with each other, vehicle type identification information for identifying a vehicle type and pieces of component region information each indicating a region of a vehicle component, where a position of the region indicated by the component region information corresponds to a position in a vehicle sample image showing a vehicle corresponding to the vehicle type,
the estimation apparatus being configured to:
identify the vehicle type based on input about an estimation target vehicle that is a target for which an estimate for repair is to be made,
acquire the component region information corresponding to the vehicle type that is identified, from the vehicle type information storage unit,
receive input about a region corresponding to a position in the vehicle sample image as input of a damaged range,
determine whether the region indicated by the component region information that is acquired and the damaged range that is input overlap each other,
determine a vehicle component and repair details for the vehicle component based on the region that is determined to be overlapped, and
calculate the estimated amount of money based on the vehicle component and the repair details for the vehicle component that are determined.

2. The estimation apparatus according to claim 1, wherein to determine, by the estimation apparatus, whether the region indicated by the component region information that is acquired and the damaged range that is input overlap each other or not is to determine at least one of whether the region indicated by the component region information that is acquired is at least partially included in the damaged range that is input, and whether the damaged range that is input is at least partially included in the region indicated by the component region information that is acquired.

3. The estimation apparatus according to claim 1 or 2, further comprising a repair information storage unit for storing, in association with one another, the vehicle type identification information, pieces of region identification information for identifying respective pieces of component region information, and the vehicle component and the repair details for the vehicle component, wherein
to determine the vehicle component and the repair details for the vehicle component is to determine the vehicle component and the repair details for the vehicle component based on vehicle identification information corresponding to the vehicle type that is identified and the region identification information corresponding to the component region information indicating the region that is determined to be overlapped that are associated with each other in the repair information storage unit.

4. The estimation apparatus according to claim 3, wherein
the repair information storage unit further stores, in association, a concomitant vehicle component and repair details for the concomitant vehicle component, repair of the concomitant vehicle component being necessary concomitantly with the vehicle component and the repair details for the vehicle component that are determined, and
the estimation apparatus
determines, based on the vehicle component and the repair details for the vehicle component that are determined, the concomitant vehicle component and the repair details for the concomitant vehicle component that are associated in the repair information storage unit, and
calculates the estimated amount of money based further on the concomitant vehicle component and the repair details for the concomitant vehicle component that are determined.

5. The estimation apparatus according to claim 3 or 4, wherein
the repair information storage unit further stores, in association, a damage level indicating a degree of damage,
the estimation apparatus receives input of the damage level corresponding to input of the damaged range, and
to determine, by the estimation apparatus, the vehicle component and the repair details for the vehicle component is to determine the vehicle component and the repair details for the vehicle component based on the vehicle identification information corresponding to the vehicle type that is identified, the region identification information corresponding to the component region information that is determined to be overlapped, and the damage level that is input that are associated with one another in the repair information storage unit.

6. The estimation apparatus according to claim 5, wherein
the vehicle type information storage unit stores a damage level reference image corresponding to one vehicle type, in association with the vehicle type identification information, the damage level reference image being an image, according to the damage level, showing a damaged part of the vehicle, and
the estimation apparatus
acquires the damage level reference image corresponding to the vehicle type that is identified, from the vehicle type information storage unit, and
displays a plurality of damage level reference images corresponding to the vehicle type that is identified, on a display device of the estimation apparatus to receive input of the damage level.

7. The estimation apparatus according to claim 5 or 6, wherein the estimation apparatus
receives, at a time of receiving input about the vehicle type of the estimation target vehicle, input of a plurality of captured images capturing the estimation target vehicle,
determines likelihood of the damage level in the captured image that is input, using a learning model obtained by learning images that are categorized based on the damage level, and
displays, as suggestion information, the likelihood of the damage level that is determined, on a display device of the estimation apparatus to receive input of the damage level.

8. The estimation apparatus according to any one of claims 1 to 7, wherein
the vehicle type information storage unit further stores, in association, the vehicle sample image corresponding to the vehicle type, and
the estimation apparatus
acquires the vehicle sample image corresponding to the vehicle type that is identified, from the vehicle type information storage unit, and
displays the vehicle sample image that is acquired on a display device of the estimation apparatus to receive input of the damaged range, and receives input of the damaged range.

9. The estimation apparatus according to any one of claims 1 to 7, wherein
the vehicle type information storage unit further stores, in association, a plurality of vehicle sample images corresponding to one vehicle type, the plurality of vehicle sample images including one reference image and a selected image showing a vehicle seen from a different angle from the reference image, and the position of the region indicated by the component region information corresponds to a position in at least one of the reference image and the selected image,
the estimation apparatus acquires the reference image and the selected image corresponding to the vehicle type that is identified, from the vehicle type information storage unit, and
to receive, by the estimation apparatus, input of the damaged range is to display, on a display device of the estimation apparatus, the reference image or the selected image that is acquired and to receive input about a region corresponding to a position in the reference image or the selected image.

10. The estimation apparatus according to claim 9, wherein to receive input of the damaged range is
to display the reference image that is acquired on the display device of the estimation apparatus and receive input of the damaged range, and to display, on the display device, a display encouraging switching to the selected image, in a case where the damaged range that is input is within a predetermined range, and
to display the selected image on the display device according to input from a user, and to receive input of the damaged range.

11. The estimation apparatus according to claim 10, wherein the predetermined range includes at least one of regions on a front part and a rear part of the vehicle in the vehicle sample image.

12. The estimation apparatus according to any one of claims 1 to 11, wherein to calculate the estimated amount of money is to determine a component price and an index indicating a repair work time based on the vehicle component and the repair details for the vehicle component that are determined, and to calculate the estimated amount of money based on the component price and the index that are determined.

13. An estimation system, including a server and a client terminal, for calculating an estimated amount of money necessary to repair a vehicle, wherein
the server includes a vehicle type information storage unit for storing, in association with each other, vehicle type identification information for identifying a vehicle type and pieces of component region information each indicating a region of a vehicle component, where a position of the region indicated by the component region information corresponds to a position in a vehicle sample image showing a vehicle corresponding to the vehicle type, and
the estimation system is configured to:
identify the vehicle type based on input about an estimation target vehicle that is a target for which an estimate for repair is to be made,
acquire the component region information corresponding to the vehicle type that is identified, from the vehicle type information storage unit,
receive input about a region corresponding to a position in the vehicle sample image as input of a damaged range,
determine whether the region indicated by the component region information that is acquired and the damaged range that is input overlap each other,
determine a vehicle component and repair details for the vehicle component based on the region that is determined to be overlapped, and
calculate the estimated amount of money based on the vehicle component and the repair details for the vehicle component that are determined.

14. An estimation method, performed by a computer, of calculating an estimated amount of money necessary to repair a vehicle, the method comprising the steps of:
identifying a vehicle type based on input about an estimation target vehicle that is a target for which an estimate for repair is to be made;
acquiring component region information corresponding to the vehicle type that is identified, from a vehicle type information database storing, in association with each other, vehicle type identification information for identifying the vehicle type and pieces of component region information each indicating a region of a vehicle component, where a position of the region indicated by the component region information corresponds to a position in a vehicle sample image showing a vehicle corresponding to the vehicle type;
receiving input about a region corresponding to a position in the vehicle sample image as input of a damaged range;
determining whether the region indicated by the component region information that is acquired and the damaged range that is input overlap each other;
determining a vehicle component and repair details for the vehicle component based on the region that is determined to be overlapped; and
calculating the estimated amount of money based on the vehicle component and the repair details for the vehicle component that are determined.

15. A program for causing a computer to perform the steps of the method according to claim 14.
